(19) Europäisches Patentamt / European Patent Office / Office européen des brevets

(11) **EP 2 023 290 A2**

(12) **DEMANDE DE BREVET EUROPEEN**

(43) Date de publication:
**11.02.2009 Bulletin 2009/07**

(51) Int Cl.:
***G06T 7/20*** (2006.01)

(21) Numéro de dépôt: **08160429.0**

(22) Date de dépôt: **15.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **16.07.2007 FR 0756516**

(71) Demandeur: **COMMISSARIAT A L'ENERGIE ATOMIQUE**
**75015 Paris (FR)**

(72) Inventeur: **Verdant, Arnaud**
**38110 La Tour du Pin (FR)**

(74) Mandataire: **Ilgart, Jean-Christophe**
**BREVALEX**
**3, rue du Docteur Lancereaux**
**75008 Paris (FR)**

(54) **Procédé et dispositif de détection de mouvement à algorithme sigma-delta à seuil adaptatif**

(57) Procédé de détection de mouvement comportant au moins les étapes suivantes :
- calcul d'un signal d'enveloppe $E_n$ d'un signal $S_n$, destiné à être délivré par au moins un pixel d'une matrice de pixels et correspondant à une n-ième image capturée ;
- calcul d'une première moyenne $M1_n$ du signal $E_n$ en fonction du signal $E_n$ et/ou de $M1_{n-1}$ ;
- calcul d'un signal $\gamma_n = E_n \times M1_n$ ;
- calcul d'une seconde moyenne $M2_n$ du signal $\gamma_n$ en fonction du signal $\gamma_n$ et/ou de $M2_{n-1}$ ;
- calcul d'une troisième moyenne $M3_n$ du signal $S_n$ en fonction du signal $S_n$ et/ou d'une valeur précédente $M3_{n-1}$ et/ou du signal $M2_n$ ;
- calcul d'un signal $\Delta_n = |S_n - M3_n|$ ;
- comparaison entre les signaux $\Delta_n$ et $M2_n$, un mouvement étant considéré comme détecté lorsque $\Delta_n > M2_n$ ;
avec n : nombre entier naturel.

FIG. 2

**EP 2 023 290 A2**

**Description**

**DOMAINE TECHNIQUE**

L'invention concerne le domaine de la détection de mouvement et plus particulièrement celui des capteurs d'images, tels que des imageurs CMOS utilisés dans le domaine du visible ou de l'infrarouge, dans lesquels un procédé de détection de mouvement est mis en oeuvre.

**ÉTAT DE LA TECHNIQUE ANTÉRIEURE**

Réaliser une détection de mouvement consiste à détecter le déplacement d'éléments mobiles par rapport à des éléments fixes dans un champ d'images capturées. Ces éléments peuvent être par exemple des véhicules ou encore des personnes. Une telle détection de mouvement consiste à isoler, parmi les signaux délivrés par un capteur d'images, ceux relatifs aux éléments mobiles, par exemple en détectant des variations significatives sur la moyenne ou la variance d'un signal d'un pixel ou d'un groupe de pixels indiquant un changement de la nature de l'élément capturé au niveau de ce pixel ou de ce groupe de pixels, par rapport à ceux relatifs aux éléments fixes dont la moyenne ou la variance reste par exemple sensiblement constante dans le temps. Pour cela, des procédés ou algorithmes de détection sont utilisés.

Une première approche consiste à utiliser un algorithme « à moyenne récursive » pour réaliser une telle détection de mouvement. Cet algorithme est basé sur un calcul d'estimation du fond, c'est-à-dire des éléments fixes se trouvant sur toutes les images capturées. Soit $X_n$ le fond, ou la moyenne, correspondant à une image n, $S_n$ le signal correspondant à l'image n acquise et 1/N un coefficient de pondération, on a alors :

$$X_n = X_{n-1} - \frac{1}{N}X_{n-1} + \frac{1}{N}S_n$$

On réalise ensuite une comparaison entre une valeur seuil $T_h$ choisie et $|S_n\text{-}X_n|$. Si la valeur obtenue est positive, cela signifie qu'un mouvement a été détecté. $X_n$ et $S_n$ peuvent être des variables obtenues à partir d'un signal délivré par un pixel ou en considérant plusieurs signaux délivrés par plusieurs pixels, par exemple un groupe de pixels disposés les uns à côté des autres et formant un macropixel, comme un seul signal, en prenant par exemple la moyenne de ces signaux.

Un tel algorithme a notamment pour inconvénient un manque de robustesse au niveau de la détection car le seuil de détection $T_h$ est déterminé à priori, avant la mise en oeuvre de l'algorithme, et est global à l'ensemble des pixels de la matrice. Cet inconvénient se traduit par une faible précision de la localisation des mouvements sur les images capturées. Le filtrage de type passe-bas réalisé par cet algorithme induit un déphasage, et donc un retard de la réponse par rapport au signal. Ce retard se traduit par un effet de traînée survenant en aval du passage d'un élément mobile.

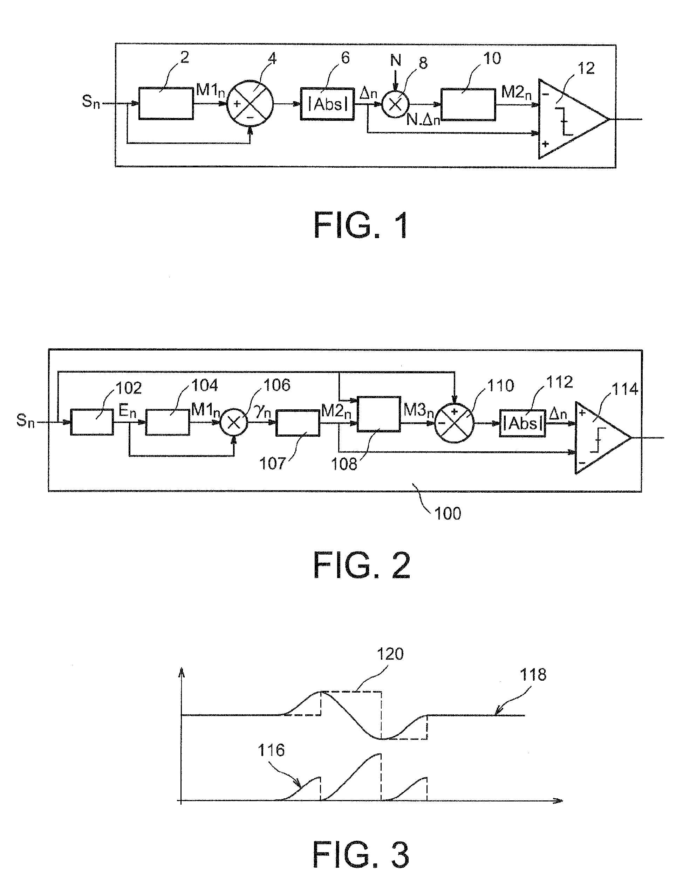

Une seconde approche consiste à utiliser un algorithme appelé sigma-delta pour réaliser une détection de mouvement. Cet algorithme permet la détection de variations significatives du signal par le biais du calcul de deux variables assimilables à la valeur moyenne et la variance du signal. La figure 1 est une représentation schématique d'un dispositif de détection de mouvement mettant en oeuvre un algorithme sigma-delta.

On calcule tout d'abord la moyenne sigma-delta $M1_n$ avec une valeur d'incrémentation et de décrémentation constante, par exemple égal à 1, du signal $S_n$ correspondant à l'image n acquise. Pour cela, le signal $S_n$ est envoyé en entrée de premiers moyens de calcul de moyenne sigma-delta 2. Ces moyens 2 réalisent tout d'abord l'initialisation $M1_0 = S_0$. Pour les images suivantes, c'est-à-dire pour n > 0, ces moyens 2 comparent $M1_{n-1}$ et $S_n$. Si $M1_{n-1} < S_n$, on incrémente alors la valeur de $M1_{n-1}$ tel que $M1_n = M1_{n-1} + 1$. Si $M1_{n-1} > S_n$, on décrémente alors la valeur de $M1_{n-1}$ tel que $M1_n = M1_{n-1} - 1$. On calcule alors le signal $\Delta_n = |M1_n - S_n|$ par un soustracteur 4 et des moyens de calcul de valeur absolue 6. On réalise ensuite le calcul de $N \times \Delta_n$ par le multiplicateur 8, N étant une constante correspondant au seuil adaptatif de l'algorithme dont la valeur est choisie en fonction de la complexité de la scène. On réalise ensuite le calcul d'une moyenne sigma-delta $M2_n$ de $N.\Delta_n$ qui est envoyé en entrée de seconds moyens de calcul de moyenne sigma-delta 10. On réalise donc tout d'abord l'initialisation $M2_0 = 0$. Pour les images suivantes, c'est-à-dire pour n > 0, on compare $M2_{n-1}$ et $N.\Delta_n$. Si $M2_{n-1} < N.\Delta_n$, on incrémente alors la valeur de $M2_{n-1}$ tel que $M2_n = M2_{n-1} + 1$. Si $M2_{n-1} > N.\Delta_n$, on décrémente alors la valeur de $M2_{n-1}$ tel que $M2_n = M2_{n-1} - 1$. On réalise enfin une comparaison par un comparateur 12 entre le signal $\Delta_n$ et $M2_n$. Si $M2_n < \Delta_n$, cela signifie qu'un mouvement a été détecté.

Comme pour l'algorithme à moyenne récursive, les variables $S_n$, $M1_n$, $\Delta_n$ et $M2_n$ peuvent être obtenues à partir d'un signal délivré par un pixel ou en considérant plusieurs signaux délivrés par plusieurs pixels, par exemple un groupe de pixels disposés les uns à côté des autres, comme un seul signal, en prenant par exemple la moyenne de ces signaux.

Toutefois, un tel algorithme a notamment pour inconvénient de ne pas filtrer les mouvements parasites hautes fréquences qui sont alors considérés comme des mouvements à détecter (par exemple, un mouvement de feuilles d'arbre ou de la neige qui tombe). De plus, la constante N utilisée doit être déterminée à priori, ce qui réduit l'adaptabilité de la détection réalisée par cet algorithme.

## EXPOSÉ DE L'INVENTION

Un but de la présente invention est donc de proposer un procédé de détection de mouvement permettant de réduire ou supprimer la détection des mouvements parasites hautes fréquences et offrant une détection plus efficace, par exemple en terme de précision de localisation des mouvements, par rapport aux procédés de l'art antérieur, et réduisant ou supprimant l'effet de « traînée » obtenu par les procédés de l'art antérieur.

Un autre but de la présente invention est également de proposer un procédé de détection de mouvement nécessitant peu de ressources matérielles de calcul et de mémoire pour être mis en oeuvre, et pouvant être implanté de manière analogique dans un imageur très basse consommation (ayant par exemple une consommation moyenne égale à environ quelques centaines de $\mu$W).

Pour cela, la présente invention propose un procédé de détection de mouvement comportant au moins les étapes suivantes :

- calcul d'un signal d'enveloppe En d'un signal $S_n$, destiné à être délivré par au moins un pixel d'une matrice de pixels et correspondant à une n-ième image capturée, égal à la valeur absolue de la différence entre le signal $S_n$ et une valeur $S_a$, avec $a \in [0;n]$, correspondant à une dernière valeur extremum atteinte par $S_n$ pour laquelle le signe de la valeur

$$\left. \frac{dS_n}{dn} \right|_{n=a}$$    est différent du signe de la valeur

$$\left. \frac{dS_n}{dn} \right|_{n=a-1} ,$$    ou pour laquelle le signe de la valeur

$(S_{a-1} - S_{a-2})$ est différent du signe de la valeur $(S_a - S_{a-1})$ ;
- calcul d'une première moyenne $M1_n$ du signal En en fonction de la valeur du signal En et/ou d'une valeur précédente $M1_{n-1}$ ;
- calcul d'un signal $\gamma_n = E_n \times M1_n$ ;
- calcul d'une seconde moyenne $M2_n$ du signal $\gamma_n$ en fonction de la valeur du signal $\gamma_n$ et/ou d'une valeur précédente $M2_{n-1}$ ;
- calcul d'une troisième moyenne $M3_n$ du signal $S_n$ en fonction de la valeur du signal $S_n$ et/ou d'une valeur précédente $M3_{n-1}$ et/ou de la valeur du signal $M2_n$ ;
- calcul d'un signal $\Delta_n = |S_n - M3_n|$ ;
- comparaison entre les signaux $\Delta_n$ et $M2_n$, un mouvement étant considéré comme détecté lorsque $\Delta_n > M2_n$ ;

avec n : nombre entier naturel.

Ainsi, on utilise un seuil de détection de mouvement adaptatif local, c'est-à-dire un seuil propre à chaque pixel dont la valeur n'est pas constante mais basée sur l'activité du signal de chacun des pixels (amplitude, fréquences des perturbations sur ce signal, ...) pour déterminer ou non la présence de mouvement à partir des variations significatives du signal.

On améliore également l'adaptabilité de la détection en supprimant certaines constantes devant être déterminées à priori dans les procédés de l'art antérieur. On adapte également la sensibilité de la détection à l'activité des pixels, et cela de manière locale, c'est-à-dire individuellement pour chaque pixel.

En l'absence de mouvement, la valeur des variations (signal En) est nulle ou proche de 0. La moyenne $M1_n$, ainsi que le produit $E_n.M1_n$ (signal $\gamma_n$) et le signal $M2_n$ sont alors également proches de 0. Ce procédé est donc bien adapté pour réaliser une détection de mouvement dans une scène comportant peu de mouvements.

De plus, ce procédé fonctionne également pour réaliser une détection de mouvement dans une scène comportant beaucoup de mouvements. En effet, quelque soit l'amplitude du signal $S_n$ survenant en cas de mouvement (avec par exemple $S_n$ variant de 10 à 100 ou de 100 à 1000, et donc En variant de 0 à 90 ou de 0 à 900), une détection de mouvements est bien réalisée car la valeur de $|S_n - M3_n|$ est bien supérieure à $M2_n$ en cas de mouvement. Ce procédé de détection de mouvement fonctionne donc quelque soit la valeur du signal $S_n$ analysé.

La première moyenne $M1_n$ peut être obtenue au moins par les étapes de calcul suivantes :

- $M1_0 = E_0$ ;
  et pour n > 0 :
- $M1_n = M1_{n-1} + C_1$ lorsque $M1_{n-1} < En$ ;
- $M1_n = M1_{n-1} - C_1$ lorsque $M1_{n-1} > E_n$ ;
  avec $C_1$ : nombre réel positif non nul.

Dans une variante, la première moyenne $M1_n$ peut être obtenue au moins à partir de l'équation suivante :

$$M1_n = M1_{n-1} - \frac{1}{N_1} M1_{n-1} + \frac{1}{N_1} E_n ,$$

avec $M1_{-1} = 0$, et

   $1/N_1$ : nombre réel positif non nul.

La valeur de la première moyenne $M1_n$ peut être supérieure à une première valeur seuil minimum non nulle $S_{M1n}$.

La seconde moyenne $M2_n$ peut être obtenue au moins par les étapes de calcul suivantes :

- $M2_0 = \gamma_0$ ;
  et pour n > 0 :
- $M2_n = M2_{n-1} + C_2$ lorsque $M2_{n-1} < \gamma_n$ ;

- $M2_n = M2_{n-1} - C_2$ lorsque $M2_{n-1} > \gamma_n$ ;
  avec $C_2$ : nombre réel positif non nul.

Dans une variante, la seconde moyenne $M2_n$ peut être obtenue au moins à partir de l'équation suivante :

$$M2_n = M2_{n-1} - \frac{1}{N_2}M2_{n-1} + \frac{1}{N_2}\gamma_n ,$$

avec $M2_{-1} = 0$, et

$1/N_2$ : nombre réel positif non nul.

La valeur de la seconde moyenne $M2_n$ peut être supérieure à une seconde valeur seuil minimum non nulle $S_{M2n}$.

De plus, la valeur de la seconde moyenne $M2_n$ peut être inférieure à une valeur seuil maximum par exemple comprise entre environ $0,1 \times$ la dynamique du signal $S_n$ et $0,2 \times$ la dynamique du signal $S_n$, la dynamique du signal correspondant à la valeur maximale que peut prendre $|S_n|$ (par exemple égale à 256 dans le cas d'un signal codé sur 8 bits).

Les valeurs seuil maximum ou minimum peuvent être imposées à ces moyennes au cours du procédé de détection afin que les valeurs de ces moyennes ne dépassent pas ces valeurs seuil.

La troisième moyenne $M3_n$ peut être obtenue au moins par les étapes de calcul suivantes :

- $M3_0 = S_0$ ;
  et pour $n > 0$ :
- $M3_n = M3_{n-1} + M2_n$ lorsque $M3_{n-1} < S_n$ ;
- $M3_n = M3_{n-1} - M2_n$ lorsque $M3_{n-1} > S_n$.

La valeur de la troisième moyenne $M3_n$ peut être supérieure à une troisième valeur seuil minimum non nulle $S_{M3n}$.

Les étapes de calcul de la première moyenne $M1_n$, du signal $\gamma_n$ et de la seconde moyenne $M2_n$ peuvent être mises en oeuvre lorsque En a une valeur non nulle.

Les valeurs des coefficients de pondérations $1/N$, ainsi que les valeurs des coefficients d'incrémentation et de décrémentation c dans le cas de calcul de moyenne de type sigma-delta, peuvent être calculées en fonction de la vitesse d'acquisition des images, et peuvent être aisément déterminées. La constante de temps $\tau$ d'une moyenne peut être égale au rapport : période d'échantillonnage de la capture d'images / $\ln(1 - 1/N)^{-1}$, la période d'échantillonnage correspondant à la période du signal $S_n$ (notée période($S_n$)).

Les valeurs des coefficients de pondérations $1/N$ pouvant être utilisés dans le calcul des moyennes $M1_n$ et/ou $M2_n$ peuvent être choisies telles que la ou les constantes de temps $\tau$ de ces moyennes soient comprises entre environ 1 seconde et 10 secondes, ou entre environ 1 seconde et 100 secondes, selon l'application visée et/ou la vitesse des mouvements à détecter.

Les valeurs des coefficients d'incrémentation / décrémentation c pouvant être utilisés dans le calcul des moyennes $M1_n$ et/ou $M2_n$ peuvent être choisies et adaptées au cours du procédé afin de satisfaire la relation $c < |dS_n/dn|$. Dans une variante, lorsque les coefficients d'incrémentation /décrémentation ont des valeurs fixes, par exemple égales à 1, il est possible d'adapter une période de rafraichissement Tn du procédé, c'est-à-dire la période à laquelle sont réalisées les étapes du procédé, afin que la relation $c < |\Delta S_n/Tn|$ soit vérifiée.

Les valeurs de $1/N_1$ et/ou de $1/N_2$ peuvent vérifier la relation :

1 s < période($S_n$)/$\ln(1 - 1/N)^{-1}$ < 100 s ;
et/ou les valeurs de $c_1$ et/ou de $c_2$ peuvent vérifier la relation :
$c < |dS_n/dn|$.

Les valeurs de $S_{M1n}$ et/ou $S_{M2n}$ et/ou $S_{M3n}$ peuvent être comprises entre environ $1/250 \times$ la dynamique du signal $S_n$ et $1/25 \times$ la dynamique du signal $S_n$, et par exemple égales à environ $1/50 \times$ la dynamique du signal $S_n$.

La présente invention concerne également un dispositif de détection de mouvement comportant au moins :

- des moyens de calcul d'un signal d'enveloppe En d'un signal $S_n$ destiné à être délivré par au moins un pixel d'une matrice de pixels et correspondant à une n-ième image capturée, égal à la valeur absolue de la différence entre le signal $S_n$ et une valeur $S_a$, avec $a \in [0;n]$, correspondant à une dernière valeur extremum atteinte par $S_n$ pour laquelle le signe de la valeur $\left.\dfrac{dS_n}{dn}\right|_{n=a}$ est différent du signe de la valeur $\left.\dfrac{dS_n}{dn}\right|_{n=a-1}$, ou pour laquelle le signe de la valeur $(S_{a-1} - S_{a-2})$ est différent du signe de la valeur $(S_a - S_{a-1})$ ;
- des moyens de calcul d'une première moyenne $M1_n$ du signal $E_n$ en fonction de la valeur du signal En et/ou d'une valeur précédente $M1_{n-1}$ ;
- des moyens de calcul d'un signal $\gamma_n = En \times M1_n$ ;
- des moyens de calcul d'une seconde moyenne $M2_n$ du signal $\gamma_n$ en fonction de la valeur du signal $\gamma_n$ et/ou d'une valeur précédente $M2_{n-1}$ ;
- des moyens de calcul d'une troisième moyenne $M3_n$ du signal $S_n$ en fonction de la valeur du signal $S_n$ et/ou d'une valeur précédente $M3_{n-1}$ et/ou de la valeur du signal $M2_n$ ;

- des moyens de calcul d'un signal $\Delta_n = |S_n - M3_n|$ ;
- des moyens de comparaison entre les signaux $\Delta_n$ et $M2_n$, un mouvement étant considéré comme détecté lorsque $\Delta_n > M2_n$ ;

avec n : nombre entier naturel.

Les moyens de calcul de la première moyenne $M1_n$ peuvent comporter au moins :

- des moyens d'initialisation de la valeur de $M1_0$ à la valeur de $E_0$ ;
- des moyens de comparaison entre la valeur du signal $M1_{n-1}$ et la valeur du signal En ;
- des moyens d'incrémentation et de décrémentation de la valeur de $M1_n$ par une constante $c_1$, avec $c_2$ : nombre réel positif non nul.

Dans une variante, les moyens de calcul de la première moyenne $M1_n$ peuvent réaliser au moins l'opération suivante :

$$M1_n = M1_{n-1} - \frac{1}{N_1} M1_{n-1} + \frac{1}{N_1} E_n \text{ ,}$$

avec $M1_{-1} = 0$, et

$1/N_1$ : nombre réel positif non nul.

Les moyens de calcul de la seconde moyenne $M2_n$ peuvent comporter au moins :

- des moyens d'initialisation de la valeur de $M2_0$ à la valeur de $\gamma_0$ ;
- des moyens de comparaison entre la valeur du signal $M2_{n-1}$ et la valeur du signal $\gamma_n$ ;
- des moyens d'incrémentation et de décrémentation de la valeur de $M2_n$ par une constante $c_2$, avec $c_2$ : nombre réel positif non nul.

Dans une variante, les moyens de calcul de la seconde moyenne $M2_n$ peuvent réaliser au moins l'opération suivante :

$$M2_n = M2_{n-1} - \frac{1}{N_2} M2_{n-1} + \frac{1}{N_2} \gamma_n \text{ ,}$$

avec $M2_{-1} = 0$, et

$1/N_2$ : nombre réel positif non nul.

Les moyens de calcul de la troisième moyenne $M3_n$ peuvent comporter au moins :

- des moyens d'initialisation de la valeur de $M3_0$ à la

valeur de $S_0$ ;

- des moyens de comparaison entre la valeur du signal $M3_{n-1}$ et la valeur du signal $S_n$ ;
- des moyens d'incrémentation et de décrémentation de la valeur de $M3_n$ par la valeur de la seconde moyenne $M2_n$.

Les moyens de comparaison peuvent comporter au moins un amplificateur opérationnel, ou amplificateur de transconductance.

Enfin, la présente invention concerne aussi un dispositif de capture d'images comportant au moins une matrice de pixels et un dispositif de détection de mouvement tel que décrit précédemment.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente schématiquement un dispositif de détection de mouvement à algorithme sigma-delta,
- la figure 2 représente schématiquement un dispositif de détection de mouvement à algorithme sigma-delta à seuil adaptatif, objet de la présente invention,
- la figure 3 représente des signaux obtenus lors d'un calcul d'un signal d'enveloppe,
- la figure 4 représente des signaux obtenus lors de la mise en oeuvre d'un procédé de détection de mouvement à algorithme sigma-delta à seuil adaptatif, objet de la présente invention,
- la figure 5 représente une partie d'un dispositif de capture d'images comportant un exemple de dispositif de détection de mouvement à algorithme sigma-delta à seuil adaptatif, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

**EXPOSÉ DÉTAILLÉ DE MODES DE RÉALISATION PARTICULIERS**

Un dispositif 100 et un procédé de détection de mouvement à algorithme sigma-delta à seuil adaptatif, selon un mode de réalisation particulier, vont maintenant être décrits en liaison avec la figure 2.

Une première étape de ce procédé est de déterminer un seuil, qui servira par la suite à déterminer la présence ou non de mouvement sur les images capturées.

On calcule tout d'abord, par des moyens de calcul 102, un signal d'enveloppe $E_n$ d'un signal $S_n$ correspondant au signal délivré par un pixel, ou un groupe de pixels également appelé macropixel, d'une n-ième image acquise. La valeur de ce signal d'enveloppe En est égale à la valeur absolue de la différence entre $S_n$ et la valeur du dernier extremum atteint précédemment par le signal $S_n$. Ce dernier extremum correspond à la dernière valeur du signal $S_n$ pour laquelle le signe de la dérivée $\dfrac{dS_n}{dn}$ a changé. La figure 3 illustre un exemple de signal d'enveloppe En (courbe 116) obtenu à partir d'un exemple de signal $S_n$ (courbe 118). La courbe 120 représente les valeurs extremum utilisées dans le calcul du signal d'enveloppe En. Si l'on considère une valeur $S_a$, avec $a \in [0; n]$, correspondant à une dernière valeur extremum atteinte par $S_n$, alors cette valeur $S_a$ est la valeur pour laquelle le signe de la valeur $\left.\dfrac{dS_n}{dn}\right|_{n=a}$ est différent du signe de la valeur $\left.\dfrac{dS_n}{dn}\right|_{n=a-1}$, ou pour laquelle le signe de la valeur $(S_{a-1} - S_{a-2})$ est différent du signe de la valeur $(Sa - S_{a-1})$.

Le signal d'enveloppe $E_n$ obtenu est bien représentatif des variations subies par le signal $S_n$ de sortie d'un pixel ou d'un macropixel et permet donc de supprimer la composante continue du signal $S_n$.

On réalise ensuite le calcul, par l'intermédiaire de moyens de calcul 104, d'une première moyenne $M1_n$ sigma-delta à niveau d'incrémentation et de décrémentation constant $c_1$ (par exemple 1 si la valeur de $M1_n$ est comprise dans une plage de valeurs de niveaux de gris) du signal d'enveloppe $E_n$. Le calcul de cette première moyenne $M1_n$ permet de calculer la moyenne des variations du signal, c'est-à-dire l'écart moyen des dispersions, pouvant s'exprimer également comme étant la moyenne des différences entre la valeur du signal et sa moyenne. Pour cela, la valeur d'incrémentation et de décrémentation $c_1$ choisie est faible (ici 1).

Pour réaliser le calcul de cette première moyenne $M1_n$, on réalise tout d'abord l'initialisation $M1_0 = E_0$. Pour les images suivantes, c'est-à-dire pour n > 0, on compare $M1_{n-1}$ et En. Si $M1_{n-1} < E_n$, on incrémente alors la valeur de $M1_{n-1}$ tel que $M1_n = M1_{n-1} + c_1$. Si $M1_{n-1} > E_n$, on décrémente alors la valeur de $M1_{n-1}$ tel que $M1_n = M1_{n-1} - c_1$.

Il est également possible que cette première moyenne $M1_n$ ne soit pas une moyenne de type sigma-delta, mais une moyenne de type récursive. Dans ce cas, les moyens de calcul 104 réalise le calcul de la première moyenne $M1_n$ récursive avec un coefficient de pondération $1/N_1$ important, du signal En. Cette première moyenne $M1_n$ récursive est obtenue par le calcul suivant :

$$M1_n = M1_{n-1} - \frac{1}{N_1}M1_{n-1} + \frac{1}{N_1}E_n$$

La valeur du coefficient de pondération $1/N_1$ est notamment choisie en fonction de l'amplitude et la fréquence des variations du signal d'enveloppe $E_n$. On a par exemple $N_1 = 2^6$ pour une capture d'images réalisées à 25 Hz environ.

Les signaux $M1_n$ et En sont ensuite envoyés en entrée d'un multiplicateur 106 réalisant le calcul du signal $\gamma_n = M1_n \times E_n$.

On réalise ensuite le calcul, par l'intermédiaire de moyens de calcul 107, d'une seconde moyenne $M2_n$ sigma-delta à niveau d'incrémentation et de décrémentation constant $c_2$ (par exemple égal à 1) du signal $\gamma_n$.

Pour réaliser le calcul de cette seconde moyenne $M2_n$, on réalise tout d'abord l'initialisation $M2_0 = \gamma_0$. Pour les images suivantes, c'est-à-dire pour n > 0, on compare $M2_{n-1}$ et $\gamma_n$. Si $M2_{n-1} < \gamma_n$, on incrémente alors la valeur de $M2_{n-1}$ tel que $M2_n = M2_{n-1} + c_2$. Si $M2_{n-1} > \gamma_n$, on décrémente alors la valeur de $M2_{n-1}$ tel que $M2_n = M2_{n-1} - c_2$.

Il est également possible que cette seconde moyenne $M2_n$ ne soit pas une moyenne de type sigma-delta, mais une moyenne de type récursive. Dans ce cas, les moyens de calcul 107 réalisent le calcul de la seconde moyenne $M2_n$ récursive avec un coefficient de pondération $1/N_2$ important, du signal $\gamma_n$. Cette seconde moyenne $M2_n$ récursive est obtenue par le calcul suivant :

$$M2_n = M2_{n-1} - \frac{1}{N_2}M2_{n-1} + \frac{1}{N_2}\gamma_n$$

La valeur du coefficient de pondération $1/N_2$ est choisie en fonction de l'amplitude et la fréquence des variations du signal d'enveloppe $\gamma_n$. On a par exemple $N_2 = 2^6$ pour une capture d'images réalisée à 25 Hz environ.

Des moyens de calcul 108 réalisent ensuite le calcul d'une troisième moyenne $M3_n$ sigma-delta du signal $S_n$. Cette troisième moyenne $M3_n$ est calculée avec un niveau d'incrémentation et de décrémentation non constant. Ce niveau d'incrémentation et de décrémentation correspond à la valeur du signal $M2_n$. On réalise tout d'abord l'initialisation $M3_0 = S_0$. Pour les images suivantes, on compare $M3_{n-1}$ et $S_n$. Si $M3_{n-1} < S_n$, on incrémente alors la valeur de $M3_{n-1}$ tel que $M3_n = M3_{n-1} + M2_n$. Si $M3_{n-1} > S_n$, on décrémente alors la valeur de $M3_{n-1}$ tel

que $M3_n = M3_{n-1} - M2_n$.

On voit donc que pour le calcul de cette troisième moyenne $M3_n$, la valeur de seuil utilisée pour l'incrémentation et la décrémentation est adaptative en fonction des variations du signal $S_n$.

Enfin, pour déterminer la présence ou non de mouvements sur l'image n capturée, on réalise une comparaison entre le signal $\Delta_n = |S_n - M3_n|$, obtenu à partir d'un soustracteur 110 et de moyens de calcul de valeur absolue 112, et le signal $M2_n$. Si $M2_n < |S_n - M3_n|$, cela signifie qu'un mouvement a été détecté sur les images capturées.

Ce procédé est basé sur le calcul d'une moyenne sigma-delta à constante d'incrémentation et de décrémentation variable en fonction des variations sur les images capturées, réalisant un filtrage des mouvements parasites hautes fréquences. Le seuillage des variations détectées est donc adaptatif.

Par rapport à une moyenne de type récursive, une valeur moyenne de type sigma-delta a pour avantage de ne pas dépendre directement de l'amplitude des variations du signal dont on calcule la moyenne.

De manière générale, les valeurs d'incrémentation et de décrémentation $c_1$ et $c_2$ et/ou les valeurs des coefficients de pondération $1/N_1$ et $1/N_2$ utilisées dans les calculs de moyennes sont adaptées en fonction de la résolution des pixels des images capturées, c'est-à-dire du nombre de niveau de gris sur lequel est codé le signal traité, ainsi que de la fréquence de fonctionnement du dispositif de détection de mouvement 100.

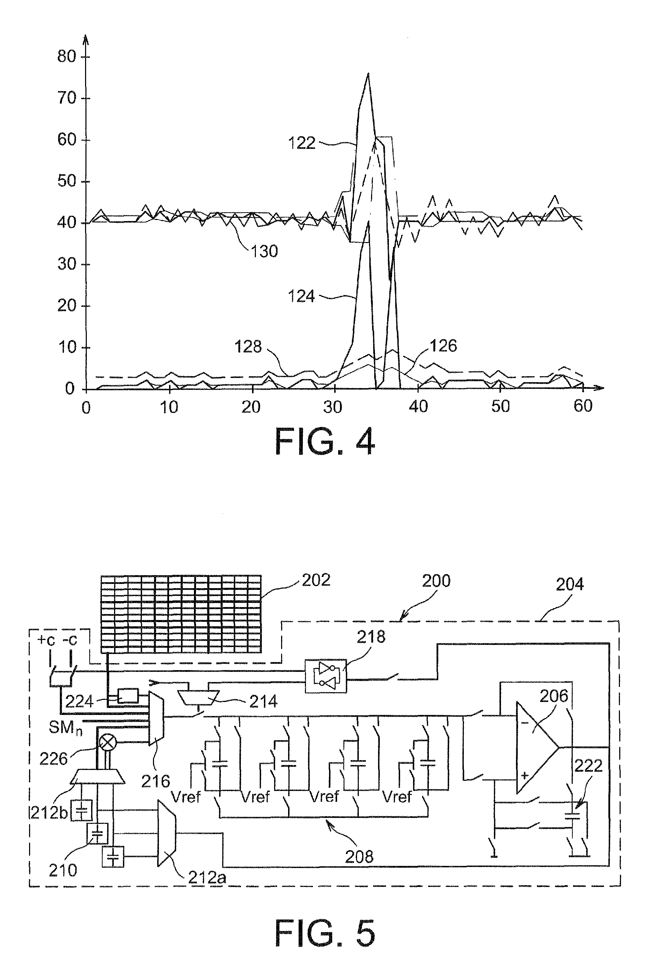

La figure 4 représente un exemple d'un signal $S_n$ issu de plusieurs images capturées par une matrice de pixels ainsi que les différents signaux calculés au cours du procédé décrit précédemment.

Sur cette figure 4, l'axe des abscisses représente l'évolution des signaux, gradué en nombre d'images capturées, et l'axe des ordonnées représente la valeur de ces signaux, gradué en niveaux de gris. La courbe 122 représente le signal $S_n$ obtenu en sortie d'un pixel ou d'un macropixel. C'est ce signal qui est envoyé en entrée du dispositif 100. La courbe 124 représente l'enveloppe $E_n$ du signal $S_n$ calculée pendant le procédé de détection de mouvement décrit précédemment. Ce signal d'enveloppe $E_n$ représente la valeur absolue des variations du signal $S_n$ par rapport à la dernière valeur extremum de $S_n$. La courbe 126 représente la première moyenne $M1_n$ calculée durant le procédé de détection de mouvement. On voit sur la figure 4 que cette moyenne $M1_n$ suit les variations les plus significatives du signal de sortie $S_n$. Les courbes 128 et 130 représentent respectivement les moyennes $M2_n$ et $M3_n$.

Durant les calculs des moyennes $M1_n$ et $M2_n$, il est possible d'imposer une valeur seuil minimum $S_{Mn}$ en dessous de laquelle il n'est pas permis que les valeurs de ces moyennes descendent. Par exemple, dans ce mode de réalisation, les valeurs de $S_{M1n}$ et/ou $S_{M2n}$ peuvent être égales à environ $1/50 \times$ la dynamique du signal $S_n$.

Un exemple de dispositif de capture d'image 200, ou imageur optique, permettant de mettre en oeuvre le procédé de détection de mouvement décrit précédemment est représenté sur la figure 5.

Le dispositif de capture d'images 200 comporte une matrice de pixels 202 et un dispositif de détection de mouvement 204. Chaque pixel de la matrice 202 est ici formé par une photodiode et de transistors d'adressage et de lecture. Le procédé de détection de mouvement décrit précédemment peut s'appliquer au signal $S_n$ délivré par un pixel, en reliant un dispositif de détection de mouvement 204 à chaque colonne de pixels de la matrice 202. Il est également possible que le procédé de détection de mouvement s'applique à un signal $S_n$ correspondant aux signaux délivrés par plusieurs pixels, par exemple la moyenne de ces signaux. Ainsi, en considérant des macropixels, il est possible de faire travailler le dispositif de capture d'images 200 avec des zones sous-résolues, et de ne détailler ces zones en mettant en oeuvre le procédé de détection de mouvement pour chaque pixel d'un macropixel que lorsqu'un mouvement a été détecté au niveau de ce macropixel. Il est alors possible de réduire le nombre de dispositif de détection de mouvement 204 dans le dispositif de capture d'images 200 en ne faisant appel qu'à un seul dispositif de détection de mouvement 204 par colonne de macropixels. Un macropixel peut par exemple être un carré de $12 \times 12$ pixels, ou encore d'une toute autre valeur, par exemple $4 \times 4$ pixels comme sur la figure 5. Les valeurs de chaque macropixel de la matrice 202 sont lues ligne par ligne.

Le dispositif de détection de mouvement 204 représenté sur la figure 5 comporte un comparateur 206, par exemple un amplificateur opérationnel, une pluralité de capacités commutées 208, des registres mémoires analogiques 210 (trois registres mémoires 210 sont représentés sur la figure 5 mais le dispositif de détection de mouvement 204 peut comporter un nombre différent de registres mémoires adapté au nombre de valeurs à stocker pendant la mise en oeuvre du procédé de détection de mouvement), un démultiplexeur d'adressage 212a, un multiplexeur d'adressage 212b, un multiplexeur 214 de commande d'écriture dans les capacités commutées 208, un multiplexeur 216 apportant notamment les valeurs à écrire dans les capacités commutées 208, une mémoire SRAM 218, un condensateur 222, des moyens de calcul 224 d'un signal d'enveloppe et des moyens de multiplication de deux signaux 226. Enfin, le dispositif de détection de mouvement 204 comporte plusieurs interrupteurs commandés permettant d'envoyer les signaux d'un des éléments énumérés précédemment dans un autre de ces éléments.

Le fonctionnement du dispositif 200 va maintenant être décrit en liaison avec la mise en oeuvre du procédé de détection de mouvement détaillé précédemment.

On réalise tout d'abord le calcul du signal d'enveloppe $E_n$ du signal $S_n$. Pour cela, le signal $S_n$ délivré en sortie de la matrice de pixels 202 est envoyé dans les moyens de calcul 224 délivrant en sortie le signal d'enveloppe En dont la valeur est calculée selon le procédé décrit précédemment. La valeur du signal d'enveloppe est ensuite stockée dans l'un des registres mémoires analogiques 210.

Ensuite, pour le calcul de la première moyenne $M1_n$, lorsque celle-ci est de type sigma-delta, on réalise l'initialisation $M1_0 = E_0$ en stockant la valeur du signal $E_0$ dans un des registres mémoire 210. Pour les images suivantes, on compare $M1_{n-1}$ et $E_n$ en appliquant l'un des deux signaux sur l'entrée positive du comparateur 206 par l'intermédiaire du condensateur 222 dans lequel est stocké ce signal, et en appliquant l'autre des deux signaux sur l'entrée négative du comparateur 206. Le résultat obtenu en sortie du comparateur 206 permet alors de sélectionner l'une des valeurs $+c_1$ ou $-c_1$ appliquées en entrée du multiplexeur 216 (+c ou -c sur la figure 5). Si $M1_{n-1} < E_n$, on incrémente alors la valeur de $M1_{n-1}$ tel que $M1_n = M1_{n-1} + c_1$. Si $M1_{n-1} > E_n$, on décrémente alors la valeur de $M1_{n-1}$ tel que $M1_n = M1_{n-1} - c_1$. Dans cet exemple de réalisation, $c_1 = 1$. L'opération d'addition ou de soustraction de $c_1$ à $M1_{n-1}$ est réalisée par l'intermédiaire des capacités 208 en stockant aux bornes de deux de ces capacités les valeurs $+/-c_1$ et $M1_{n-1}$, et en reliant ces capacités en série de manière à réaliser une addition de ces deux valeurs.

Dans une variante, la première moyenne $M1_n$ peut être de type récursive et calculée à partir de l'équation suivante :

$$M1_n = M1_{n-1} - \frac{1}{N_1}M1_{n-1} + \frac{1}{N_1}S_n \text{ ,}$$

Pour cela, le signal $M_{n-1}$ (avec $M_{-1} = 0$) est envoyé aux bornes d'une première des capacités commutées 208 dont la valeur est égale à $(N_1-1)/N_1$. La valeur du signal $M_{n-1}$ est stockée aux bornes de cette capacité commutée.

On lit ensuite le signal $S_n$ délivré par le premier macropixel de la matrice 202 en entrée du multiplexeur 216. La valeur du signal $S_n$ est stockée aux bornes d'une seconde capacité commutée dont la valeur est égale à $1/N_1$.

En reliant en parallèle ces deux capacités commutées, on obtient bien le signal

$$M1_n = M1_{n-1} - \frac{1}{N_1}M1_{n-1} + \frac{1}{N_1}S_n \text{ à leurs bor-}$$

nes.

La valeur de la moyenne $M1_n$ est alors stockée dans un des registres mémoire 210.

On réalise ensuite, pour obtenir le signal $\gamma_n$, le produit $E_n \times M1_n$. Pour cela, les deux valeurs de En et $M1_n$ stockées dans les registres mémoires 210 sont envoyées sur les deux entrées des moyens de multiplication 226, le résultat de cette multiplication pouvant ensuite être stocké dans un des registres mémoires 210.

De manière similaire au calcul de la première moyenne $M1_n$ du signal d'enveloppe $E_n$, on réalise le calcul de la seconde moyenne $M2_n$ du signal $\gamma_n$. Comme la première moyenne $M1_n$, la seconde moyenne $M2_n$ peut être de type sigma-delta ou de type récursive. La mise en oeuvre de ce calcul est réalisée par les mêmes éléments du dispositif 204 que ceux utilisés pour le calcul de la première moyenne $M1_n$ lorsque $M1_n$ et $M2_n$ sont du même type.

On réalise ensuite le calcul de la troisième moyenne sigma-delta $M3_n$ du signal $S_n$ avec comme valeur d'incrémentation et de décrémentation $M2_n$. La mise en oeuvre de ce calcul est réalisée par les mêmes éléments du dispositif 204 que ceux utilisés pour le calcul de la première moyenne $M1_n$ lorsque celle-ci est du type sigma-delta.

On réalise ensuite le calcul du signal $\Delta_n = |S_n - M3_n|$. Cette opération peut être réalisée par l'intermédiaire des capacités commutées 208.

On réalise alors une comparaison par l'intermédiaire de l'amplificateur 206 entre le signal $\Delta_n$ et le signal $M2_n$. La valeur obtenue en sortie de l'amplificateur 206 permet de déterminer la détection ou non d'un mouvement au niveau du macropixel considéré. Si $\Delta_n > M2_n$, alors on considère qu'un mouvement a été détecté au niveau du macropixel considéré. Cette valeur obtenue en sortie de l'amplificateur 206 peut être stockée dans la mémoire 218.

L'opération est ensuite répétée pour les macropixels suivants, ligne après ligne.

Durant tous les calculs des moyennes $M1_n$ et $M2_n$, il est possible d'imposer une valeur seuil minimum en dessous de laquelle il n'est pas permis que les valeurs de ces moyennes descendent. Cette valeur seuil minimum $S_{Mn}$ peut être appliquée en entrée du multiplexeur 216. Lorsque la valeur d'une de ces moyennes devient inférieure à la valeur de ce seuil, la valeur de cette moyenne est alors remplacée par la valeur seuil. Cette valeur seuil peut être différente selon que l'on calcule $M1_n$ ou $M2_n$. Dans ce cas, il est possible d'avoir plusieurs valeurs seuil minimum non nulle $S_{M1n}$ et $S_{M2n}$ appliquées en entrée du multiplexeur 216. De plus, on peut imposer une valeur seuil maximum au-dessus de laquelle il n'est pas permis que la valeur de la seconde moyenne $M2_n$ monte. Lorsque la valeur de $M2_n$ dépasse la valeur de ce seuil maximum, la valeur de cette moyenne est alors remplacée par la valeur seuil maximum par exemple appliquée en entrée du multiplexeur 216.

Lorsqu'un mouvement est détecté au niveau d'un macropixel, il est possible, pour une image n dont la détection de mouvement a été réalisée sur des macropixels, de stocker les valeurs des macropixels dans la mémoire 218, puis, au niveau du ou des macropixels ayant enregistré des mouvements, de mettre en oeuvre le procédé de détection de mouvement décrit précédemment pour chacun des pixels du macropixel. Ainsi, il est possible de définir précisément la localisation des mouvements détectés sans traiter tous les pixels des images capturées.

On voit donc que le procédé peut être mis en oeuvre à partir de peu de ressources matérielles de calcul (un amplificateur opérationnel, plusieurs capacités commutées avec une fréquence d'horloge pour les instructions de quelques dizaines de kHz et quelques multiplexeurs / démultiplexeurs) et de mémoire (quelques registres analogiques par pixel et une mémoire SRAM par exemple).

Le dispositif représenté sur le figure 5 permet une mise en oeuvre analogique du procédé de détection de mouvement décrit précédemment. Toutefois, il est également possible de réaliser une mise en oeuvre numérique du procédé de détection de mouvement en reliant la matrice de pixels 202 à des moyens de traitement numérique du signal, par exemple un circuit de type DSP, FPGA ou un microprocesseur, dans lequel le procédé de détection de mouvement est programmé.

Les signaux obtenus en sortie des dispositifs de détection de mouvement peuvent être utilisés pour afficher une image sur laquelle le fond capturé forme un fond noir sur lequel les éléments mobiles détectés sont représentés en blanc.

**Revendications**

1. Procédé de détection de mouvement comportant au moins les étapes suivantes :

- calcul d'un signal d'enveloppe En d'un signal $S_n$ destiné à être délivré par au moins un pixel d'une matrice de pixels (202) et correspondant à une n-ième image capturée, égal à la valeur absolue de la différence entre le signal $S_n$ et une valeur $S_a$, avec $a \in [0;n]$, correspondant à une dernière valeur extremum atteinte par $S_n$ pour laquelle le signe de la valeur $\left.\dfrac{dS_n}{dn}\right|_{n=a}$ est différent du signe de la valeur $\left.\dfrac{dS_n}{dn}\right|_{n=a-1}$ ;

- calcul d'une première moyenne $M1_n$ du signal En en fonction de la valeur du signal $E_n$ et/ou d'une valeur précédente $M1_{n-1}$ ;
- calcul d'un signal $\gamma_n = E_n \times M1_n$ ;
- calcul d'une seconde moyenne $M2_n$ du signal $\gamma_n$ en fonction de la valeur du signal $\gamma_n$ et/ou d'une valeur précédente $M2_{n-1}$ ;
- calcul d'une troisième moyenne $M3_n$ du signal $S_n$ en fonction de la valeur du signal $S_n$ et/ou d'une valeur précédente $M3_{n-1}$ et/ou de la valeur du signal $M2_n$ ;

- calcul d'un signal $\Delta_n = |S_n - M3_n|$ ;
- comparaison entre les signaux $\Delta_n$ et $M2_n$, un mouvement étant considéré comme détecté lorsque $\Delta_n > M2_n$ ;

avec n : nombre entier naturel.

2. Procédé selon la revendication 1, la première moyenne $M1_n$ étant obtenue au moins par les étapes de calcul suivantes :

- $M1_0 = E_0$ ;
et pour n > 0 :
- $M1_n = M1_{n-1} + c_1$ lorsque $M1_{n-1} < En$ ;
- $M1_n = M1_{n-1} - c_1$ lorsque $M1_{n-1} > E_n$ ;
avec $c_1$ : nombre réel positif non nul.

3. Procédé selon la revendication 1, la première moyenne $M1_n$ étant obtenue au moins à partir de l'équation suivante :

$$M1_n = M1_{n-1} - \frac{1}{N_1}M1_{n-1} + \frac{1}{N_1}E_n \, ,$$

avec $M1_{-1} = 0$, et

$1/N_1$ : nombre réel positif non nul.

4. Procédé selon l'une des revendications précédentes, la seconde moyenne $M2_n$ étant obtenue au moins par les étapes de calcul suivantes :

- $M2_0 = \gamma_0$ ;
et pour n > 0 :
- $M2_n = M2_{n-1} + c_2$ lorsque $M2_{n-1} < \gamma_n$ ;
- $M2_n = M2_{n-1} - c_2$ lorsque $M2_{n-1} > \gamma_n$ ;
avec $c_2$ : nombre réel positif non nul.

5. Procédé selon l'une des revendications 1 à 3, la seconde moyenne $M2_n$ étant obtenue au moins à partir de l'équation suivante :

$$M2_n = M2_{n-1} - \frac{1}{N_2}M2_{n-1} + \frac{1}{N_2}\gamma_n \, ,$$

avec $M2_{-1} = 0$, et

$1/N_2$ : nombre réel positif non nul.

6. Procédé selon l'une des revendications précédentes, la troisième moyenne $M3_n$ étant obtenue au moins par les étapes de calcul suivantes :

- $M3_0 = S_0$ ;

et pour n > 0 :
- $M3_n = M3_{n-1} + M2_n$ lorsque $M3_{n-1} < S_n$ ;
- $M3_n = M3_{n-1} - M2_n$ lorsque $M3_{n-1} > S_n$.

**7.** Procédé selon l'une des revendications précédentes, la valeur de la première moyenne $M1_n$ étant supérieure à une première valeur seuil minimum non nulle $S_{M1n}$ et/ou la valeur de la seconde moyenne $M2_n$ étant supérieure à une seconde valeur seuil minimum non nulle $S_{M2n}$.

**8.** Procédé selon la revendication 7, les valeurs de $S_{M1n}$ et/ou $S_{M2n}$ étant comprises entre environ 1/250 $\times$ la dynamique du signal $S_n$ et 1/25 $\times$ la dynamique du signal $S_n$.

**9.** Procédé selon l'une des revendications précédentes, la valeur de la seconde moyenne $M2_n$ étant inférieure à une valeur seuil maximum comprise entre environ $0,1 \times$ la dynamique du signal $S_n$ et $0,2 \times$ la dynamique du signal $S_n$.

**10.** Procédé selon l'une des revendications précédentes, les étapes de calcul de la première moyenne $M1_n$, du signal $\gamma_n$ et de la seconde moyenne $M2_n$ étant mises en oeuvre lorsque En a une valeur non nulle.

**11.** Procédé selon l'une des revendications précédentes, dans lequel les valeurs de $1/N_1$ et/ou de $1/N_2$ vérifient la relation :

1 s < période$(S_n)$/ln$(1 - 1/N)^{-1}$ < 100 s ;
et/ou les valeurs de $c_1$ et/ou de $c_2$ vérifient la relation :
$c < |dS_n/dn|$.

**12.** Dispositif de détection de mouvement (100, 204) comportant au moins :

- des moyens de calcul (102) d'un signal d'enveloppe En d'un signal $S_n$ destiné à être délivré par au moins un pixel d'une matrice de pixels (202) et correspondant à une n-ième image capturée, égal à la valeur absolue de la différence entre le signal $S_n$ et une valeur $S_a$, avec $a \in [0; n]$, correspondant à une dernière valeur extremum atteinte par $S_n$ pour laquelle le signe de la

valeur $\left.\dfrac{dS_n}{dn}\right|_{n=a}$ est différent du signe de la

valeur $\left.\dfrac{dS_n}{dn}\right|_{n=a-1}$ ;

- des moyens de calcul (104) d'une première moyenne $M1_n$ du signal En en fonction de la valeur du signal En et/ou d'une valeur précédente $M1_{n-1}$ ;
- des moyens de calcul (106) d'un signal $\gamma_n = En \times M1_n$ ;
- des moyens de calcul (107) d'une seconde moyenne $M2_n$ du signal $\gamma_n$ en fonction de la valeur du signal $\gamma_n$ et/ou d'une valeur précédente $M2_{n-1}$ ;
- des moyens de calcul (108) d'une troisième moyenne $M3_n$ du signal $S_n$ en fonction de la valeur du signal $S_n$ et/ou d'une valeur précédente $M3_{n-1}$ et/ou de la valeur du signal $M2_n$ ;
- des moyens de calcul (110, 112) d'un signal $\Delta_n - |S_n - M3_n|$ ;
- des moyens de comparaison (114, 206) entre les signaux $\Delta_n$ et $M2_n$, un mouvement étant considéré comme détecté lorsque $\Delta_n > M2_n$ ;

avec n : nombre entier naturel.

**13.** Dispositif (100, 204) selon la revendication 12, les moyens de calcul (104) de la première moyenne $M1_n$ comportant au moins :

- des moyens d'initialisation de la valeur de $M1_0$ à la valeur de $E_0$ ;
- des moyens de comparaison entre la valeur du signal $M1_{n-1}$ et la valeur du signal $E_n$ ;
- des moyens d'incrémentation et de décrémentation de la valeur de $M1_n$ par une constante $c_1$, avec $c_1$ : nombre réel positif non nul.

**14.** Dispositif (100, 204) selon la revendication 12, les moyens de calcul (104) de la première moyenne $M1_n$ réalisant au moins l'opération suivante :

$$M1_n = M1_{n-1} - \frac{1}{N_1} M1_{n-1} + \frac{1}{N_1} E_n \, ,$$

avec $M1_{-1} = 0$, et

$1/N_1$ : nombre réel positif non nul.

**15.** Dispositif (100, 204) selon l'une des revendications 12 à 14, les moyens de calcul (107) de la seconde moyenne $M2_n$ comportant au moins :

- des moyens d'initialisation de la valeur de $M2_0$ à la valeur de $\gamma_0$ ;
- des moyens de comparaison entre la valeur du signal $M2_{n-1}$ et la valeur du signal $\gamma_n$ ;
- des moyens d'incrémentation et de décrémentation de la valeur de $M2_n$ par une constante $c_2$, avec $c_2$ : nombre réel positif non nul.

**16.** Dispositif (100, 204) selon l'une des revendications 12 à 14, les moyens de calcul (107) de la seconde moyenne $M2_n$ réalisant au moins l'opération suivante :

$$M2_n = M2_{n-1} - \frac{1}{N_2} M2_{n-1} + \frac{1}{N_2} \gamma_n \, ,$$

avec $M2_{-1} = 0$, et

$1/N_2$ : nombre réel positif non nul.

**17.** Dispositif (100, 204) selon l'une des revendications 12 à 16, les moyens de calcul (108) de la troisième moyenne $M3_n$ comportant au moins :

- des moyens d'initialisation de la valeur de $M3_0$ à la valeur de $S_0$ ;
- des moyens de comparaison entre la valeur du signal $M3_{n-1}$ et la valeur du signal $S_n$ ;
- des moyens d'incrémentation et de décrémentation de la valeur de $M3_n$ par la valeur de la seconde moyenne $M2_n$.

**18.** Dispositif de capture d'images (200) comportant au moins une matrice de pixels (202) et un dispositif de détection de mouvement (100, 204) selon l'une des revendications 12 à 17.

FIG. 1

FIG. 2

FIG. 3

FIG. 4

FIG. 5